# EUROPÄISCHE PATENTANMELDUNG

(11) **EP 2 101 151 A2**
(43) Veröffentlichungstag der Anmeldung: **16.09.2009**
(21) Anmeldenummer: 09002631.1
(22) Anmeldetag: 25.02.2009
(51) Int. Cl.: G01C 21/34

(54) **Routingverfahren zur Berechnung einer Route**

(30) Priorität: 11.03.2008 DE 102008013636; 12.06.2008 DE 102008027957
(71) Anmelder: Navigon AG, 20251 Hamburg (DE)
(72) Erfinder: Jansen, Ralph, Dr., 97340 Marktbreit (DE); Körtge, Harald, 97204 Höchberg (DE)
(74) Vertreter: Böck, Bernhard

(57) **Zusammenfassung**

Die Erfindung betrifft ein Routingverfahren zur Berechnung einer Route zwischen einem ersten Routenendpunkt (03), insbesondere einem Startpunkt, und einem zweiten Routenendpunkt (04), insbesondere einem Zielpunkt, unter Verwendung einer elektronisch gespeicherten Straßenkarte, mit folgenden Verfahrensschritten:
a) Bestimmung eines Ausgangspunkts (03) auf einer Kachel (02a);
b) Berechnung eines Wegkostenwertes für alle Wege vom Ausgangspunkt (03) zu allen Grenzelementen (06) der Kachel (02a) mit einem Routenberechnungsmodul, wobei in der Wegkostenberechnung die Wegkosten zwischen Ausgangspunkt (03) und jedem Grenzelement (06) exakt bestimmt werden;
c) Berechnung einer Wegkostenabschätzung für alle Grenzelemente (06) der Kachel (02a) mit einem Abstandsbewertungsmodul, wobei in der Wegkostenabschätzung die Wegkosten von einem Grenzelement (06) der Kachel (02a) zu einem der beiden Routenendpunkte (04) anhand des Abstandes zwischen Grenzelement (06) und Routenendpunkt (04) schätzend bewertet werden;
d) Bestimmung eines Kombinationswertes für alle Grenzelemente (06) der Kachel (02a) in einem Kombinationsbewertungsmodul, wobei bei der Kombinationsbewertung die exakt berechneten Wegkosten innerhalb der Kachel (02a) und die abgeschätzten Wegkosten außerhalb der Kachel (02b) kombiniert bewertet werden;
e) Bestimmung der nächsten Kachel (02b) zur Fortsetzung der Routenberechnung in Abhängigkeit der Kombinationsbewertung;
f) Wiederholung der Schritte a) bis e), bis eine Abbruchbedingung erfüllt ist.

## Beschreibung

Die Erfindung betrifft ein Routingverfahren zur Berechnung einer Route nach dem Oberbegriff des Anspruchs 1.

Gattungsgemäße Routingverfahren werden beim Betrieb von Navigationssystemen eingesetzt, um eine Route zwischen zwei Routenendpunkten zu berechnen. Bei den Routenendpunkten kann es sich insbesondere um den Startpunkt und den Zielpunkt einer von einem Fahrer eines Fahrzeugs geplanten Fahrroute handeln.

Grundlage jedes auf einem elektronischen Assistenzsystem, insbesondere einem Navigationsgerät, ausgeführten Routingverfahrens ist eine elektronisch gespeicherte Straßenkarte, die das aus Straßen und Kreuzungen bestehende Straßennetz eines bestimmten geographischen Gebiets in elektronisch lesbarer Form beschreibt und dazu in einer Datenbank gespeichert ist. Um die Verwaltung der Daten zur Beschreibung der elektronischen Straßenkarte zu vereinfachen, ist es bekannt, die Straßenkarte in mehrere Teilbereiche aufzuteilen, die nachfolgend ganz allgemein als Kacheln bezeichnet werden sollen. Die in der Datenbank als einzelne Datensatzgruppen gespeicherten Kacheln ergänzen sich dabei insgesamt zur Gesamtheit der Straßenkarte. Da jede Kachel in Relation zum gesamten geographischen Gebiet relativ klein ist, können durch selektive Bearbeitung der den Kacheln zugeordneten Datensatzgruppen schnelle Verarbeitungsverfahren bei Nutzung sehr begrenzter Systemressourcen realisiert werden. Eine elektronisch gespeicherte Straßenkarte, die in einzelne Kacheln aufgeteilt ist, ist beispielsweise in der DE 199 57 469 A1 beschrieben.

Die in einzelne Kacheln aufgeteilte Straßenkarte wird dadurch charakterisiert, dass zwischen benachbarten Kacheln Grenzlinien vorhanden sind. In diesen Grenzlinien geht die Straßenkarte in Grenzelementen, insbesondere Grenzstraßen, Grenzkreuzungen und/oder Grenzpunkten, kontinuierlich ineinander über.

Bei konventionellen Routingverfahren startet die Routenberechnung an einem Routenendpunkt und die mit dem Routingalgorithmus durchgeführte Berechnungsfront breitet sich in der Art einer kreisförmigen Welle um diesen Routenendpunkt aus. Dies bedeutet mit anderen Worten, dass bei den bisher bekannten Routingverfahren in alle Richtungen mit gleicher Geschwindigkeit nach Routenalternativen gesucht wird, ohne dass die Relativlage des zweiten Routenendpunkts in Relation zum ersten Routenendpunkt berücksichtigt würde. Sobald die kreisförmige Berechnungsfront den zweiten Routenendpunkt erreicht hat, wird das Routingverfahren abgebrochen, da dann zumindest eine mögliche Route gefunden ist.

Auch bei Verwendung einer in Kacheln aufgeteilten elektronischen Straßenkarte können diese konventionellen Routenberechnungsalgorithmen zum Einsatz kommen. Ausgehend von einer ersten Kachel, in der der erste Routenendpunkt liegt, breitet sich dann die kreiswellenförmige Routenberechnungsfront über die in Kacheln aufgeteilte Straßenkarte aus, wobei an den Grenzlinien zwischen den einzelnen Kacheln die Routenberechnung immer an den Grenzelementen von einer Kachel in die nächste Kachel übergeht.

Nachteilig an den bekannten Routingverfahren ist es, dass eine Vielzahl von Berechnungsschritten durchgeführt werden muss, obwohl absehbar ist, dass es sich nicht um sehr aussichtsreiche Varianten zur Auffindung einer Route handelt. Dies ist insbesondere dann nachteilig, wenn sehr lange Routen berechnet werden müssen. Soll beispielsweise eine Route vom Nordkap nach Gibraltar berechnet werden, so ist es bei Anwendung der konventionellen Routenberechnungsalgorithmen notwendig, eine sich um das Nordkap kreiswellenförmig ausbreitende Berechnungsfront abzuarbeiten, bis die Berechnungsfront den zweiten Routenendpunkt in Gibraltar überstrichen hat. Dabei müssen dann eine Vielzahl von Kacheln der Straßenkarte durchgerechnet werden, obwohl offensichtlich ist, dass diese Alternativen nicht zu einer brauchbaren Route führen werden. Im Ergebnis führen die bekannten Routenberechnungsverfahren deshalb insbesondere bei sehr langen Strecken zu sehr langen Routenberechnungszeiten, was unerwünscht ist.

Ausgehend von diesem Stand der Technik ist es deshalb Aufgabe der vorliegenden Erfindung, ein neues Routingverfahren zur Berechnung einer Route vorzuschlagen, das die Nachteile des vorbekannten Stands der Technik vermeidet.

Diese Aufgabe wird durch ein Routingverfahren nach der Lehre des Anspruchs 1 gelöst.

Vorteilhafte Ausführungsformen der Erfindung sind Gegenstand der Unteransprüche.

Grundüberlegung des erfindungsgemäßen Routingverfahrens ist es, dass die Suche nach einer geeigneten Route in bestimmte Richtungen aussichtsreicher ist als in andere Richtungen. Liegt beispielsweise der zweite Routenendpunkt genau südlich des ersten Routenendpunkts, so ist eine Suche nach einer Route in Richtung Norden nur sehr wenig aussichtsreich, wohingegen die Suche nach einer Route in Richtung Süden mit relativ hoher Wahrscheinlichkeit zu einem geeigneten Ergebnis führt.

Bei dem erfindungsgemäßen Verfahren wird diese Grundüberlegung damit verknüpft, dass bei der Berechnung eine elektronisch gespeicherte Straßenkarte verwendet wird, die in einzelne Kacheln aufgeteilt ist.

Bei dem erfindungsgemäßen Verfahren wird in einem Berechnungsschritt jeweils zunächst ein Ausgangspunkt aus einer Kachel gewählt. Zu Beginn des eigentlichen Routenberechnungsverfahrens wird der Ausgangspunkt regelmäßig einer der beiden Routenendpunkte sein. Ausgehend von diesem Ausgangspunkt wird dann mit einem Routenberechnungsmodul der Wegkostenwert für alle Wege vom Ausgangspunkt zu allen Grenzelementen der Kachel berechnet. Bei der Wegkostenberechnung innerhalb der Kachel werden dabei die Wegkosten zwischen dem Ausgangspunkt und jedem Grenzelement exakt bestimmt. Dies bedeutet mit anderen Worten, dass innerhalb der Kachel in konventioneller Weise eine sich kreiswellenförmig ausbreitende Berechnungsfront erzeugt wird und die Berechnung erst abgebrochen wird, wenn die Berechnungsfront alle Grenzelemente der Kachel überdeckt hat.

In einem zweiten Schritt wird dann mit einem Abstandsbewertungsmodul eine Wegkostenabschätzung für alle Grenzelemente der Kachel durchgeführt. Bei der Wegkostenabschätzung werden die Wegkosten von jedem Grenzelement der Kachel zu einem der beiden Routenendpunkte anhand des Abstands zwischen dem Grenzelement und dem Routenendpunkt abschätzend bewertet. Diese Wegkostenabschätzung ist dabei in der Berechnung erheblich einfacher als die exakte Wegkostenberechnung, da die Abschätzung beispielsweise allein anhand der Luftlinie zwischen dem Grenzelement und dem Routenendpunkt durchgeführt werden kann.

Mit dem Routenberechnungsmodul wird also innerhalb der Kachel eine exakte Wegkostenbewertung vorgenommen, wohingegen mit dem Abstandsbewertungsmodul für den Weg außerhalb der Kachel lediglich eine Wegkostenabschätzung durchgeführt wird. Diese beiden Teilergebnisse werden dann in einem dritten Schritt in einem Kombinationsbewertungsmodul gemeinsam bewertet. Für jedes Grenzelement der jeweils betrachteten Kachel ergibt sich dann eine Kombinationsbewertung, die zum einen auf den exakt berechneten Wegkosten innerhalb der Kachel und zum anderen auf den abgeschätzten Wegkosten außerhalb der Kachel beruht. Im nächsten Schritt wird dann abhängig von den Kombinationsbewertungen der einzelnen Grenzelemente die unmittelbar benachbarte Kachel bestimmt, an der die Routenberechnung fortgesetzt wird. Üblicherweise wird man dabei die Kachel zur Fortsetzung des Routenberechnungsverfahrens zumindest mit auswählen, die mit der aktuell berechneten Kachel das Grenzelement mit der besten Kombinationsbewertung teilt.

Anschließend werden die Berechnungsschritte dann für die nächste Kachel wiederholt, bis insgesamt eine Abbruchbedingung erfüllt ist, beispielsweise zumindest eine Route zwischen den beiden Routenendpunkten ermittelt wurde. Durch die Anwendung des erfindungsgemäßen Verfahrens wird die Möglichkeit geschaffen, die Berechnungsfront des Routenalogorithmus in Vorzugsrichtung auszubreiten. Die Vorzugsrichtung der Routenberechnungsfront ergibt sich dabei insbesondere aus der im Abstandsbewertungsmodul durchgeführten Wegkostenabschätzung, die über das Kombinationsbewertungsmodul in die Kombinationsbewertung einfließt.

Soll die gesamte Route mit dem erfindungsgemäßen Routingverfahren berechnet werden, was in der Regel sinnvoll ist, ist zu Beginn der Routenberechnung in Schritt a) ein erster Routenendpunkt als Ausgangspunkt zu setzen.

Außerdem ist bei Berechnung der gesamten Route mit dem erfindungsgemäßen Verfahren die Abbruchbedingung in Schritt f) erst dann erfüllt, wenn zumindest eine Route zwischen den beiden Routenendpunkten ermittelt ist.

Im Kern beruht das erfindungsgemäße Verfahren auf der kombinierten Bewertung der innerhalb der Kachel exakt berechneten Wegkosten und der außerhalb der Kachel lediglich abgeschätzten Wegkosten. Es ist dabei offensichtlich, dass sich unterschiedliche Ergebnisse ergeben, je nachdem wie stark die beiden Teilergebnisse bei der Kombinationsbewertung gewichtet werden. Wird beispielsweise die exakte Wegkostenberechnung innerhalb der Kachel bei der Kombinationsbewertung sehr stark gewichtet, und die Wegkostenabschätzung außerhalb der Kachel nur sehr schwach, ergeben sich Berechnungsergebnisse, die der kreiswellenförmigen Ausbreitung der Berechnungsfront bei konventionellen Routenberechnungsverfahren entsprechen. Wird dagegen die Wegkostenabschätzung außerhalb der Kachel stark gewichtet, und die exakte Wegkostenberechnung innerhalb der Kachel nur schwach gewertet, ergibt sich eine sich eher linienförmig ausbreitende Berechnungsfront, wobei sich diese Berechnungslinie weitgehend geradlinig von einem Routenendpunkt zum anderen Routenendpunkt ausbreitet. Um das erfindungsgemäße Routingverfahren zwischen diesen beiden Extremen geeignet abstimmen zu können, ist es besonders vorteilhaft, wenn im Kombinationsbewertungsmodul ein erster und ein zweiter Korrekturwert vorgesehen sind, wobei bei der Kombinationsbewertung die exakt berechneten Wegkosten innerhalb der Kachel mit dem ersten Korrekturwert und die abgeschätzten Wegkosten außerhalb der Kachel mit dem zweiten Korrekturwert multipliziert werden. Je nach Relation zwischen erstem Korrekturwert und zweitem Korrekturwert kann somit die Gewichtung der Wegkostenberechnung innerhalb der Kachel relativ zur Wegkostenabschätzung außerhalb der Kachel eingestellt werden.

Es ist denkbar, dass der erste Korrekturwert und der zweite Korrekturwert fest vorgegeben werden und alle Routenberechnungsverfahren mit genau diesen Vorgabewerten durchgeführt werden. Der erste Korrekturwert und der zweite Korrekturwert sind dabei dann so zu wählen, dass sie eine geeignete Kompromisslösung zwischen den Extremen darstellen. Im Vergleich dazu ist es jedoch besonders vorteilhaft, wenn der erste Korrekturwert und der zweite Korrekturwert in Abhängigkeit eines Routenparameters variabel verändert werden können. Insbesondere ist es vorteilhaft, wenn der erste Korrekturwert und der zweite Korrekturwert in Abhängigkeit von der Distanz zwischen den beiden Routenendpunkten veränderbar sind. Es hat sich nämlich gezeigt, dass bei sehr langen Routen, die eine große Distanz zwischen den beiden Routenendpunkten aufweisen und eine Vielzahl von Kacheln überstreichen, eine eher linienförmige Ausbreitung der Routenberechnungsfront von Vorteil ist, wohingegen bei relativ kurzen Routen mit kurzer Distanz zwischen den beiden Routenendpunkten eine kreiswellenförmige Ausbreitung der Routenberechnungsfront zu den besten Ergebnissen führt. Soll beispielsweise eine Route vom Nordkap nach Gibraltar berechnet werden, sollte bei der Kombinationsbewertung die Wegkostenabschätzung außerhalb der Kachel stark gewichtet werden, wohingegen die exakte Wegkostenberechnung innerhalb einer Kachel nur relativ geringe Bedeutung für die Auswahl der Suchrichtung haben sollte. Wird dagegen eine Route innerhalb eines Nahbereichs, beispielsweise in einem Innenstadtgebiet, gesucht, sollte die exakte Wegkostenberechnung bei der Kombinationsbewertung stark gewichtet werden.

Bei der Berechnung einer Route mit dem erfindungsgemäßen Routingverfahren werden die Berechnungsschritte a) bis f) regelmäßig sehr oft wiederholt werden müssen, um eine geeignete Route zu finden. Am Ende jeder Berechnungsschleife muss dabei im Schritt e) des Routingverfahrens die jeweils nächste Kachel ausgewählt werden, bei der die Routenberechnung fortgeführt wird. Um möglichst rasch und effektiv geeignete Routen auffinden zu können, ist es besonders vorteilhaft, wenn jeweils die unmittelbar benachbarte Kachel für die Fortsetzung des Routingverfahrens ausgewählt wird, die mit der aktuellen Kachel das Grenzelement mit der besten Kombinationsbewertung aufweist. Dies bedeutet mit anderen Worten, dass, nachdem für alle Grenzelemente einer Kachel jeweils eine Kombinationsbewertung vorgenommen wurde, die sich dabei ergebenden Kombinationsbewertungen miteinander verglichen werden und für den nächsten Berechnungsschritt dann die unmittelbar benachbarte Kachel ausgewählt wird, die mit der aktuellen Kachel das Grenzelement mit der besten Kombinationsbewertung teilt. Als Ausgangspunkt in Schritt a) des nächsten Berechnungsschritts wird dabei gerade dieses Grenzelement mit der besten Kombinationsbewertung gesetzt, um im Ergebnis zu einer ununterbrochenen Route gelangen zu können.

Werden bei der Durchführung des erfindungsgemäßen Routingverfahrens bei der Auswahl der jeweils nächsten Kachel zur Durchführung des nächsten Berechnungsschritts mit den Verfahrensschritten a) bis f) jeweils nur die Kacheln betrachtet, die unmittelbar benachbart zu der Kachel sind, für die der letzte Berechnungsschritt durchgeführt wurde, kann dies dazu führen, dass die Routenberechnungsfront in Sackgassen stecken bleibt oder nicht die am besten geeignete Route findet. Wurde beispielsweise aufgrund einer sehr guten Wegkostenabschätzung zu Anfang eine bestimmte Suchrichtung eingeschlagen und endet der Weg in diese Richtung jedoch vor einem See, einem Berg oder einem anderen nicht zu passierenden Hindernis, so sollte das Routenberechnungsverfahren in der Lage sein, an weiter zurückliegende Punkte, für die eine Bewertung bereits durchgeführt wurde, zurückzuspringen. Dieses Zurückspringen an bereits abgearbeitete Punkte kann durch das Führen einer Kontrollliste erreicht werden. In dieser Kontrollliste wird für jede Grenzlinie einer Kachel, die während der Routenberechnung bereits durch Durchführung einer Kombinationsbewertung abgearbeitet wurde ein Speicherbereich mit zwei Speicherplätzen generiert. In jedem dieser Speicherplätze kann ein Kontrolldatensatz gespeichert werden, so dass jeweils zwei Kontrolldatensätze einer Grenzlinie zugeordnet sind. Der erste Kontrolldatensatz beschreibt dabei jeweils die beim Übergang an der Grenzlinie in die eine Richtung festgestellte beste Kombinationsbewertung und das Grenzelement, das dieser Kombinationsbewertung zugeordnet ist. Der zweite Kontrolldatensatz enthält das Grenzelement, das die beste Kombinationsbewertung in Gegenrichtung ergeben hat.

Alternativ kann die Kontrollliste auch kompakter und damit schneller durchsuchbar gespeichert werden, indem lediglich pro Kachel - und nicht pro Kachelgrenzlinie - gespeichert wird, welches die beste Kombinationsbewertung ist.

Im Ergebnis stellt die Kontrollliste somit das Gedächtnis der Routenberechnung dar, in dem die Grenzelemente mit den jeweils besten Kombinationsbewertungen an einer Grenzlinie gespeichert sind. Nach Durchführung jeder Berechnungsschleife mit den Schritten a) bis f) wird die Kontrollliste um die sich dabei ergebenden Grenzelemente mit den jeweils besten Kombinationsbewertungen an den einzelnen Grenzlinien erweitert. Für die Auswahl der jeweils nächsten Kachel zur Fortsetzung des Routenberechnungsverfahrens werden bei Führung der Kontrolllisten nicht mehr nur noch die unmittelbar benachbarten Kacheln der aktuellen Kachel betrachtet, sondern alle Kacheln, die über die in der Kontrollliste gespeicherten Grenzelemente definiert sind. Die Auswahl der jeweils nächsten Kachel kann dabei so erfolgen, dass in der Kontrollliste das Grenzelement gesucht wird, das nach der dynamischen Aktualisierung der Kontrollliste jeweils die beste Kombinationsbewertung aufweist. Dabei ist jeweils die Übergangsrichtung zwischen den jeweils benachbarten Kacheln, die durch die Kontrolldatensätze definiert ist, zu beachten. Als Ausgangspunkt in Schritt a) des nächsten Berechnungsschritts wird dann gerade dieses Grenzelement mit der aktuell besten Kombinationsbewertung in der Kontrollliste benutzt. Im Ergebnis kann dadurch erreicht werden, dass das Routenberechnungsverfahren jeweils an die Stelle des Berechnungspfads zurückspringt, die in der Kontrollliste die beste Kombinationsbewertung aufweist. Dadurch kann eine Sackgassenbildung bei der Fortentwicklung der Routenberechnungsfront ausgeschlossen werden.

Wird bei Durchführung des erfindungsgemäßen Routingverfahrens eine Kontrollliste geführt, muss diese jeweils dynamisch aktualisiert werden. Die Aktualisierung der Kontrollliste muss sich dabei an den Grenzlinien zwischen den Kacheln orientieren. Die dynamische Aktualisierung der Kontrollliste sollte bevorzugt durchgeführt werden, nachdem für die jeweils aktuell betrachtete Kachel die Kombinationsbewertung für alle ihre Grenzelemente durchgeführt wurde. Soweit dabei festgestellt wird, dass für eine Grenzlinie der aktuellen Kachel bisher noch kein Kontrolldatensatz mit einem darin gespeicherten Grenzelement und der zugehörigen Kombinationsbewertung vorhanden ist, wird ein neuer Kontrolldatensatz für diese Grenzlinie erzeugt und die aktuelle Kombinationsbewertung mit dem zugeordneten Grenzelement darin abgespeichert. Ist dagegen für eine Grenzlinie bereits ein Kontrolldatensatz vorhanden, weil die entsprechende Kachel beispielsweise im Rahmen des Routenberechnungsverfahrens bereits einmal überschritten worden ist, so muss der vorhandene Kontrolldatensatz daraufhin überprüft werden, ob eine Aktualisierung notwendig ist. Dazu wird die aktuelle Kombinationsbewertung mit der im Kontrolldatensatz bereits gespeicherten Kombinationsbewertung verglichen. Ist die aktuelle Kombinationsbewertung besser als die im Kontrolldatensatz bereits gespeicherte Kombinationsbewertung, werden die im Kontrolldatensatz gespeicherten Daten mit dem aktuellen Grenzelement und der aktuellen Kombinationsbewertung überschrieben. Ist die aktuelle Kombinationsbewertung dagegen nicht besser als die gespeicherte Kombinationsbewertung, bleiben die im Kontrolldatensatz gespeicherten Daten unverändert.

Um endlose Iterationsschleifen zu verhindern, sollte der Kontrolldatensatz, dessen Grenzelement bereits für die Fortführung des Routenberechnungsverfahrens in einem der vorhergehenden Berechnungsschritte ausgewählt wurde, aus der Kontrollliste gelöscht werden. Auf diese Weise wird verhindert, dass das Routenberechnungsverfahren erneut zu diesem Grenzelement zurückkehrt und wiederum die Routenberechnung an der gleichen Stelle fortgesetzt wird.

Für eine effektive Durchführung des Verfahrens unter Verwendung der Kontrollliste ist es vorteilhaft, wenn nur solche Kontrolldatensätze in der Kontrollliste abgespeichert werden, die eine Verbesserung des Ergebnisses bei der Routenfindung wahrscheinlich machen. Dies ist insbesondere dann von Bedeutung, wenn nach Auffinden einer ersten möglichen Route zwischen den beiden Routenendpunkten auch noch nach Alternativrouten gesucht werden soll, die gegebenenfalls geringere Wegkosten aufweisen. Nach einer bevorzugten Verfahrensvariante ist es deshalb vorgesehen, dass nach Auffinden einer ersten Route bzw. nach Auffinden späterer Alternativrouten zwischen den zwei Routenendpunkten neue Kontrolldatensätze in die Kontrollliste jeweils nur dann aufgenommen werden, wenn die Kombinationsbewertung des neuen Kontrolldatensatzes besser als ein bestimmter Schwellwert ist. Dadurch kann verhindert werden, dass nach weiteren Alternativrouten gesucht wird, die offensichtlich keine besseren Alternativrouten mehr ergeben können.

Der Schwellwert selber sollte dynamisch aus der Kombinationsbewertung der ersten Route oder aus der Kombinationsbewertung einer der letzten Alternativrouten zwischen den beiden Routenendpunkten abgeleitet werden.

Neben der Verhinderung der Abspeicherung von neuen Kontrolldatensätzen, die offensichtlich nicht mehr zu besseren Routen führen können, ist es weiterhin besonders vorteilhaft, wenn aus der Kontrollliste auch alle Kontrolldatensätze gelöscht werden, deren Kombinationsbewertung schlechter als der Schwellwert ist. Denn für all die Grenzelemente in diesen Kontrolldatensätzen ist mit einer aussichtsreichen Fortführung des Routenberechnungsverfahrens angesichts der gegenüber dem Schwellwert schlechteren Kombinationsbewertung nicht mehr zu rechnen.

Um zu verhindern, dass bestimmte Routenalternativen zu früh aus der Aufnahme in die Kontrollliste ausgeschlossen werden bzw. zu früh aus der Kontrollliste gelöscht werden, kann der Schwellwert als Produkt aus der Kombinationsbewertung mit einem Sicherheitsfaktor abgeleitet werden. Der Sicherheitsfaktor sollte dabei einen Wert größer 1 aufweisen.

Als geeignete Abbruchbedingung für den Abbruch des erfindungsgemäßen Verfahrens ist bei Verwendung der Kontrollliste das vollständige Entleeren der Kontrollliste anzusehen. Denn sobald die Kontrollliste keine Grenzelemente mehr enthält, die sich als geeigneter Ausgangspunkt für die weitere Suche anbieten, ist die Suche nach weiteren Routenalternativen nicht mehr sinnvoll. Die Erfüllung dieser Abbruchbedingung wird dabei dadurch erheblich beschleunigt, dass bei Verwendung eines Schwellwerts alle Kontrolldatensätze, die schlechter als der Schwellwert sind, aus der Kontrollliste gelöscht werden und neue Kontrolldatensätze nur noch erzeugt werden, wenn die entsprechende Kombinationsbewertung des Grenzelements besser als der Schwellwert ist.

In der Grundform wird das Routingverfahren angewendet, um die Routenberechnung von einem Routenendpunkt in Richtung des anderen Routenendpunktes zu treiben, bis die Routenberechnungsfront ausgehend vom ersten Routenendpunkt den zweiten Routenendpunkt überschreitet. Um die Berechnungszeit für die Berechnung zumindest einer Route zwischen den beiden Routenendpunkten weiter zu beschleunigen, ist es jedoch besonders vorteilhaft, wenn die Routenberechnung in zwei Routensuchrichtungen sowohl vom ersten Routenendpunkt als auch vom zweiten Routenendpunkt beginnend durchgeführt wird. Das bedeutet mit anderen Worten, dass die Suche nach einer geeigneten Route zugleich von beiden Routenendpunkten ausgehend begonnen wird, so dass sich zwei Routenberechnungsfronten ausgehend von den beiden Routenendpunkten ausbreiten. Sobald sich die beiden beispielsweise ellipsoidförmig ausbreitenden Routenberechnungsfronten überschneiden, ergibt sich daraus zumindest eine denkbare Route zwischen den beiden Routenendpunkten.

Als Abbruchbedingung für den Abbruch der Suche ausgehend von beiden Routenendpunkten ist es besonders vorteilhaft, wenn jeweils überprüft wird, ob beide Routenberechnungen aus beiden Suchrichtungen jeweils eine übereinstimmende Straße aufgefunden haben. In dieser übereinstimmenden Straße gehen dann die beiden Teilrouten ineinander über.

Wird gleichzeitig in zwei Suchrichtungen ausgehend von den beiden Routenendpunkten gesucht, ist es besonders vorteilhaft, wenn im Kombinationsbewertungsmodul zusätzlich auch noch die Klassifizierung der Wichtigkeit der Straßen, auf der ein Grenzelement liegt, insbesondere die Klassifizierung der Straße als Autobahn, Bundesstraße oder Landstraße, bewertend berücksichtigt wird. Dem liegt die Erkenntnis zugrunde, dass mit zunehmender Distanz vom Start- bzw. Zielpunkt, d.h. also mit zunehmender Distanz von den beiden Routenendpunkten, in der Regel nur noch höherwertige Straßen, insbesondere Autobahnen, benutzt werden. In diesem Bereich lohnt es sich deshalb dann nicht mehr, unwichtigere Straßen, beispielsweise die Autobahn kreuzende kleinere Landstraßen, nach geeigneten Alternativrouten abzusuchen.

Selbstverständlich kann auch bei Durchführung der Routenberechnung in zwei Suchrichtungen jeweils für beide Suchrichtungen eine Kontrollliste geführt werden, um die jeweils nächste Kachel für den jeweils nächsten Berechnungsschritt auszuwählen. Die Abbruchbedingung ist dabei dann so zu modifizieren, dass die Berechnung abgebrochen wird, wenn eine der beiden Kontrolllisten leer ist und noch keine einzige Route mit einer übereinstimmenden Straße ermittelt wurde. In diesem Fall ist nämlich davon auszugehen, dass einer der beiden Routenendpunkte ein im Straßennetz isolierter Ortspunkt ist, der nicht über die Straßen des Straßennetzes angefahren werden kann. Diese frühzeitige Erkennung von isolierten Routenendpunkten ist ein großer Vorteil der gleichzeitigen Suche ausgehend von beiden Routenendpunkten, da dieses Ergebnis ansonsten erst nach Durchrechnung einer Vielzahl von Kacheln erkannt werden kann.

Wurde die Abbruchbedingung wegen einer leeren Kontrollliste erfüllt, sollte eine Fehlermeldung ausgegeben werden, mit der der Benutzer auf einen isolierten Routenendpunkt hingewiesen wird.

Die datentechnische Gestaltung der Kacheln ist grundsätzlich beliebig. Nach einer bevorzugten Ausführungsform decken die Kacheln jeweils die gleiche Fläche der Straßenkarte ab.

Außerdem ist es besonders vorteilhaft, wenn die Kacheln jeweils die gleiche Gestalt, insbesondere eine Rechteckform, aufweisen.

Für die exakte Wegkostenberechnung innerhalb der Kacheln kann ein Standard-Wegkostenberechnungsalogorithmus, insbesondere der Routingalgorithmus nach Dijkstra oder der Routingalgorithmus nach Belmann-Ford, eingesetzt werden.

Die Wegkostenabschätzung im Abstandsbewertungsmodul kann ebenfalls auf verschiedene Weisen durchgeführt werden. Besonders schnell und effektiv ist diese Abschätzung, wenn als Distanz für die Abschätzung im Abstandsbewertungsmodul die Luftlinie zwischen dem jeweils zu betrachtenden Grenzelement und dem Routenendpunkt bestimmt wird.

Als geeignetes Berechnungsverfahren für die Abschätzung der Wegkosten im Abstandsbewertungsmodul hat sich der so genannte "A-Star-Algorithmus" erwiesen.

Verschiedene Aspekte des erfindungsgemäßen Verfahrens sind in den Zeichnungen schematisch dargestellt und werden nachfolgend beispielhaft erläutert.

Es zeigen:
- Fig. 1: ein in mehrere Kacheln aufgeteiltes geografisches Gebiet mit dem darin vorhandenen Straßennetz in Ansicht von oben;
- Fig. 2: das Straßennetz gemäß Fig. 1 nach Durchführung der exakten Wegkostenberechnung in einer ersten Kachel;
- Fig. 3: das Straßennetz gemäß Fig. 2 nach Durchführung der Wegkostenabschätzung;
- Fig. 4: das Straßennetz gemäß Fig. 3 nach Festlegung der Kachel für den nächsten Berechnungsschritt.

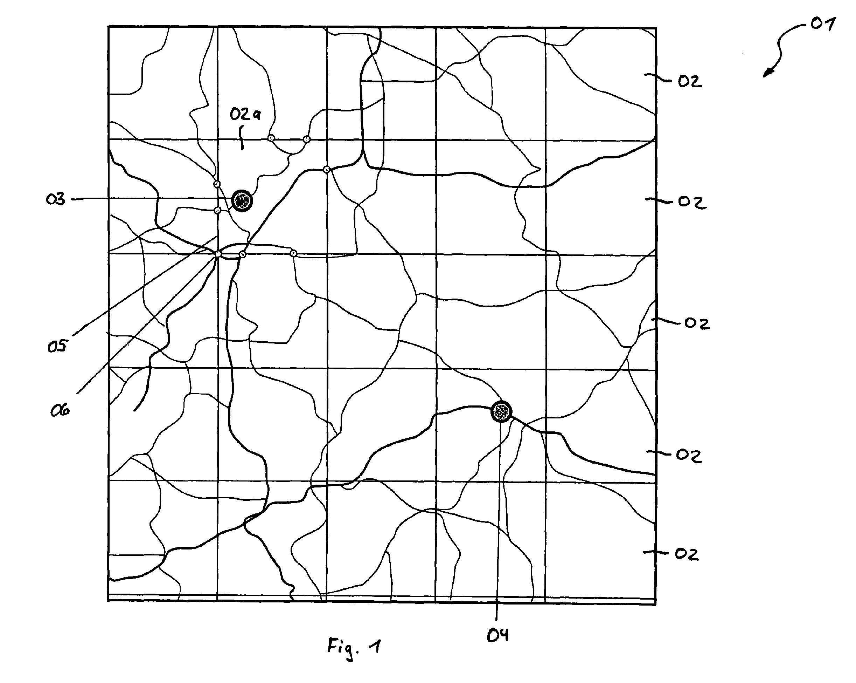

In Fig. 1 ist das Straßennetz in einem geografischen Gebiet 01 schematisch dargestellt. Das geografische Gebiet 01 ist in 25 Kacheln 02 aufgeteilt, die jeweils als separate Datensatzgruppen in einer Datenbank gespeichert sind. Das erfindungsgemäße Routingverfahren soll nachfolgend beispielhaft anhand der Möglichkeit zur Berechnung einer Route zwischen einem ersten Routenendpunkt 03 und einem zweiten Routenendpunkt 04 erläutert werden.

Für den ersten Berechnungsschritt des erfindungsgemäßen Routingverfahrens wird zunächst die Kachel 02a bestimmt, in der der Routenendpunkt 03, bei dem es sich beispielsweise um den gewünschten Startpunkt der Route handelt, liegt. Die Kachel 02a weist vier Grenzlinien 05 zu ihren unmittelbar benachbarten Kacheln 02 auf, wobei das Straßennetz an den Grenzelementen 06 von der Kachel 02a in die benachbarten Kacheln 02 übergeht.

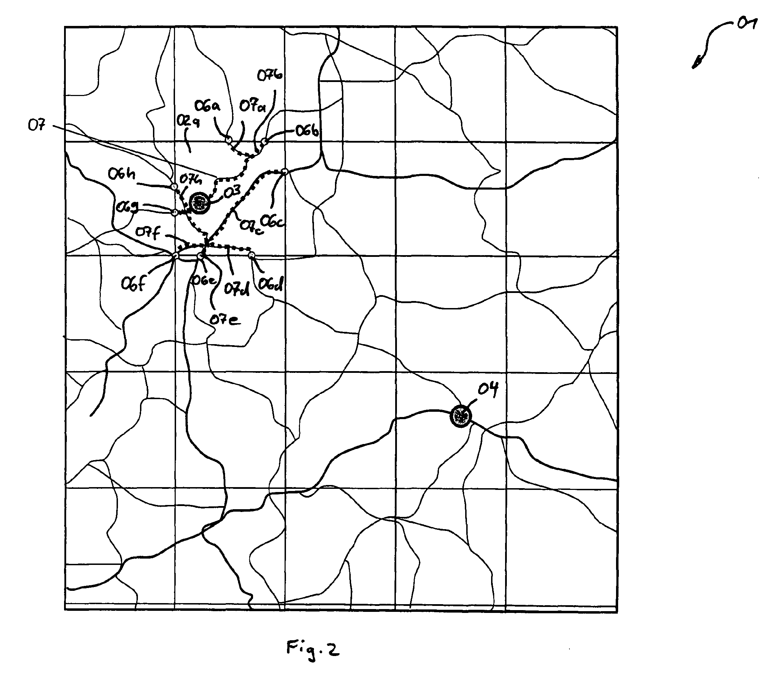

Wie in Fig. 2 dargestellt, wird dann innerhalb der Kachel 02a mit einem geeigneten Routenberechnungsverfahren für jedes der Grenzelemente 06a bis 06h eine strichpunktiert dargestellte Route 07a bis 07h zu den einzelnen Grenzelementen 06a bis 06h berechnet. Für jede dieser Routenalternativen 07a bis 07h werden die exakten Wegkosten berechnet.

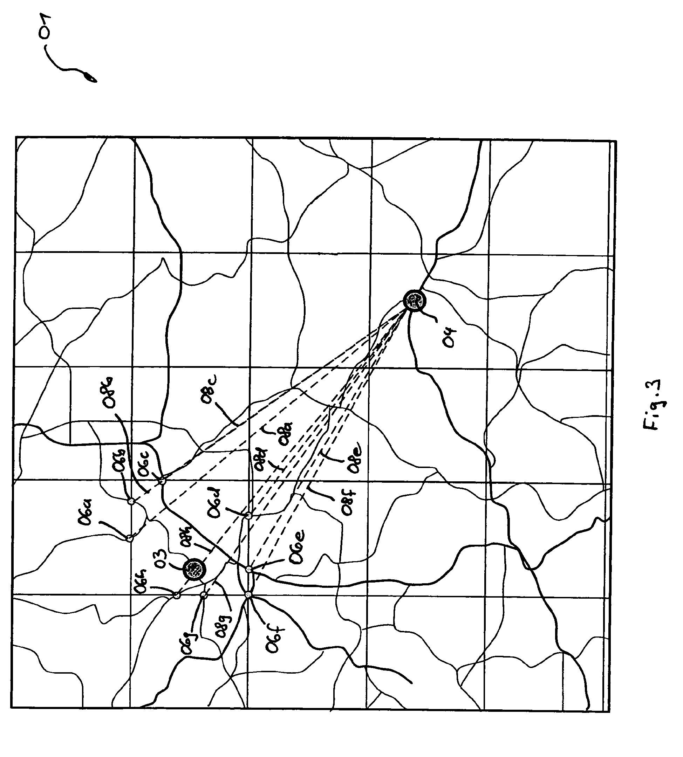

Anschließend werden, wie in Fig. 3 schematisch dargestellt, für jedes Grenzelement 06 die Wegkosten anhand der Luftlinie 08 zwischen den Grenzelementen der Kachel 02a und dem zweiten Routenendpunkt 04 abgeschätzt. Das gemäß Fig. 2 ermittelte erste Zwischenergebnis, nämlich die exakten Wegkosten innerhalb der Kachel, und das gemäß Fig. 3 ermittelte zweite Zwischenergebnis, nämlich die abgeschätzten Wegkosten außerhalb der Kachel, werden anschließend in einem Kombinationsbewertungsmodul bewertet.

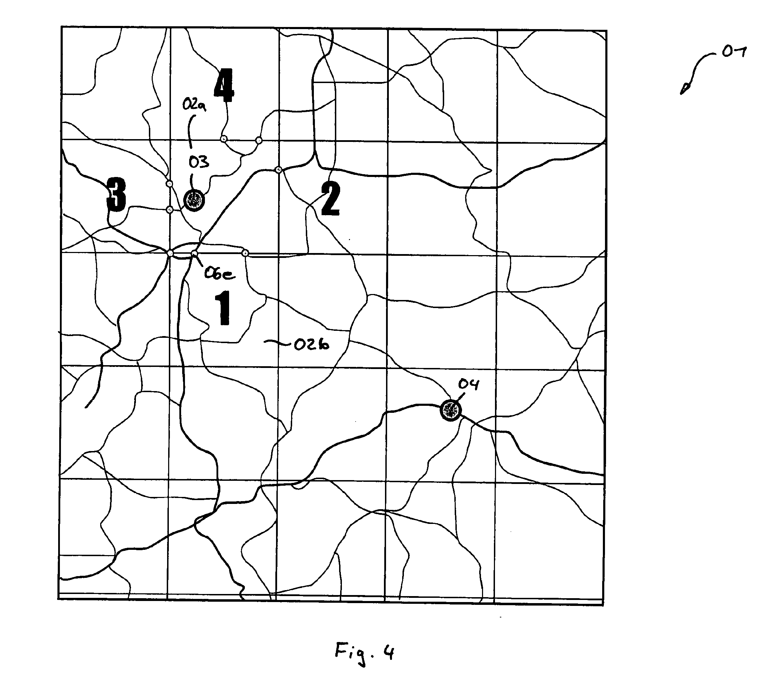

Wie in Fig. 4 dargestellt, ergibt sich dabei beispielsweise, dass das Grenzelement 06e die beste Kombinationsbewertung aufweist, so dass die Routenberechnung nachfolgend mit der Kachel 02b und dem Grenzelement 06e als Ausgangspunkt fortgesetzt wird. Die Kombinationsbewertung der an den anderen Grenzlinien 05 jeweils am besten bewerteten Grenzelemente 06 wird in einer Kontrollliste zwischengespeichert. Anschließend wird die oben dargestellte Verfahrensweise fortgesetzt, bis die sich ellipsoid ausbreitende Routenberechnungsfront den zweiten Routenendpunkt 04 überstrichen hat.

## Patentansprüche

1. Routingverfahren zur Berechnung einer Route zwischen einem ersten Routenendpunkt (03), insbesondere einem Startpunkt, und einem zweiten Routenendpunkt (04), insbesondere einem Zielpunkt, unter Verwendung einer elektronisch gespeicherten Straßenkarte, die das aus Straßen und Kreuzungen bestehende Straßennetz eines bestimmten geographischen Gebiets (01) durch Datensätze in einer Datenbank beschreibt, wobei die Straßenkarte in mehrere Teilbereiche, nämlich Kacheln (02), aufgeteilt ist, die als einzelne Datensatzgruppen in der Datenbank gespeichert sind, und wobei sich die Kacheln (02) zur Gesamtheit der Straßenkarte ergänzen, und wobei das Straßennetz an den Grenzlinien (05) zwischen benachbarten Kacheln (02) in Grenzelementen (06), insbesondere Grenzstraßen, Grenzkreuzungen
und/oder Grenzpunkten, übergeht,
mit folgenden Verfahrensschritten:
a) Bestimmung eines Ausgangspunkts (03) auf einer Kachel (02a);
b) Berechnung eines Wegkostenwertes für alle Wege vom Ausgangspunkt (03) zu allen Grenzelementen (06) der Kachel (02a) mit einem Routenberechnungsmodul, wobei in der Wegkostenberechnung die Wegkosten zwischen Ausgangspunkt (03) und jedem Grenzelement (06) exakt bestimmt werden;
c) Berechnung einer Wegkostenabschätzung für alle Grenzelemente (06) der Kachel (02a) mit einem Abstandsbewertungsmodul, wobei in der Wegkostenabschätzung die Wegkosten von einem Grenzelement (06) der Kachel (02a) zu einem der beiden Routenendpunkte (04) anhand des Abstandes zwischen Grenzelement (06) und Routenendpunkt (04) schätzend bewertet werden;
d) Bestimmung eines Kombinationswertes für alle Grenzelemente (06) der Kachel (02a) in einem Kombinationsbewertungsmodul, wobei bei der Kombinationsbewertung die exakt berechneten Wegkosten innerhalb der Kachel (02a) und die abgeschätzten Wegkosten außerhalb der Kachel (02b) kombiniert bewertet werden;
e) Bestimmung der nächsten Kachel (02b) zur Fortsetzung der Routenberechnung in Abhängigkeit der Kombinationsbewertung;
f) Wiederholung der Schritte a) bis e), bis eine Abbruchbedingung erfüllt ist.

2. Routingverfahren nach Anspruch 1,
**dadurch gekennzeichnet,**
**dass** als Ausgangspunkt in Schritt a) bei Beginn der Routenberechnung ein erster Routenendpunkt (03) gesetzt wird.

3. Routingverfahren nach Anspruch 1 oder 2,
**dadurch gekennzeichnet,**
**dass** die Abbruchbedingung erfüllt ist, wenn zumindest eine Route zwischen den beiden Routenendpunkten ermittelt ist.

4. Routingverfahren nach einem der Ansprüche 1 bis 3,
**dadurch gekennzeichnet,**
**dass** bei Bestimmung des Kombinationswertes für die Grenzelemente (06) der Kachel (02a) im Kombinationsbewertungsmodul die exakt berechneten Wegkosten innerhalb der Kachel (02a) mit einem ersten Korrekturwert und/oder die abgeschätzten Wegkosten außerhalb der Kachel (02a) mit einem zweiten Korrekturwert multipliziert werden.

5. Routingverfahren nach Anspruch 4,
**dadurch gekennzeichnet,**
**dass** der erste Korrekturwert und/oder der zweite Korrekturwert in Abhängigkeit eines Routenparameters, insbesondere in Abhängigkeit von der Distanz zwischen den beiden Routenendpunkten (03, 04), veränderbar sind.

6. Routingverfahren nach einem der Ansprüche 1 bis 5,
**dadurch gekennzeichnet,**
**dass** in Schritt e) die Routenberechnung mit der nächsten unmittelbar benachbarten Kachel (02b) fortgesetzt wird, deren Grenzlinie (05) mit der vorhergehenden Kachel (02a) das Grenzelement (06e) mit der besten Kombinationsbewertung aufweist,
wobei als Ausgangspunkt in Schritt a) des nächsten Berechnungsschrittes das Grenzelement (06e) mit der besten Kombinationsbewertung gesetzt wird.

7. Routingverfahren nach einem der Ansprüche 1 bis 5,
**dadurch gekennzeichnet,**
**dass** eine geordnete Kontrollliste geführt wird, in der für jede Grenzlinie (05) zwischen einer bei der Routenberechnung bereits abgearbeiteten Kachel (02) zu einer unmittelbar benachbarten Kachel (02) zwei Kontrolldatensätze gespeichert werden können, wobei der erste Kontrolldatensatz die beim Übergang an der Grenzlinie (05) in die erste Richtung festgestellte beste Kombinationsbewertung und das zugeordnete Grenzelement (06) enthält, und wobei der zweite Kontrolldatensatz die beim Übergang an der Grenzlinie (05) in die Gegenrichtung festgestellte beste Kombinationsbewertung und das zugeordnete Grenzelement (06) enthält,
und wobei in Schritt e) die Routenberechnung mit der nächsten Kachel (02) fortgesetzt wird, deren Grenzlinie (05) in der Kontrollliste den Kontrolldatensatz mit der besten Kombinationsbewertung aufweist,
und wobei als Ausgangspunkt in Schritt a) des nächsten Berechnungsschrittes das in diesem Kontrolldatensatz gespeicherte Grenzelement (06) gesetzt wird.

8. Routingverfahren nach Anspruch 7,
**dadurch gekennzeichnet,**
**dass** nach Berechnung der Kombinationsbewertung in Schritt d) jeweils geprüft wird, ob für diese Grenzlinie (05) bereits ein Kontrolldatensatz in der Kontrollliste vorhanden ist, wobei,
aa) wenn kein Kontrolldatensatz für diese Grenzlinie (05) vorhanden ist, ein neuer Kontrolldatensatz erzeugt wird und die aktuelle Kombinationsbewertung und das zugeordnete Grenzelement (06) darin gespeichert werden;
bb) wenn ein Kontrolldatensatz für diese Grenzlinie (05) vorhanden ist, jeweils geprüft wird, ob die aktuelle Kombinationsbewertung besser als die im Kontrolldatensatz bereits gespeicherte Kombinationsbewertung ist, wobei in diesem Fall die im Kontrolldatensatz gespeicherte Kombinationsbewertung und das zugeordnete Grenzelement (06) mit der aktuellen Kombinationsbewertung und dem zugeordneten Grenzelement (06) überschrieben werden.

9. Routingverfahren nach Anspruch 7 oder 8,
**dadurch gekennzeichnet,**
**dass** der Kontrolldatensatz, in dem der Ausgangspunkt in Schritt a) für den nächsten Berechnungsschritt gespeichert ist, aus der Kontrollliste gelöscht wird.

10. Routingverfahren nach einem der Ansprüche 7 bis 9,
**dadurch gekennzeichnet,**
**dass** nach Auffinden einer ersten Route oder späteren Alternativroute zwischen den zwei Routenendpunkten (03, 04) neue Kontrolldatensätze in die Kontrollliste nur dann aufgenommen werden, wenn die Kombinationsbewertung des neuen Kontrolldatensatzes besser als ein Schwellwert ist.

11. Routingverfahren nach Anspruch 10,
**dadurch gekennzeichnet,**
**dass** der Schwellwert dynamisch aus der Kombinationsbewertung der ersten Route oder aus der Kombinationsbewertung der letzten Alternativroute zwischen den zwei Routenendpunkten abgeleitet wird.

12. Routingverfahren nach Anspruch 10 oder 11,
**dadurch gekennzeichnet,**
**dass** aus der Kontrollliste alle vorhandenen Kontrolldatensätze gelöscht werden, deren Kombinationsbewertung schlechter als der Schwellwert ist.

13. Routingverfahren nach einem der Ansprüche 10 bis 12,
**dadurch gekennzeichnet,**
**dass** der Schwellwert als Produkt aus der Kombinationsbewertung mit einem Sicherheitsfaktor abgeleitet wird, wobei der Sicherheitsfaktor einen Wert größer 1 aufweist.

14. Routingverfahren nach einem der Ansprüche 7 bis 13,
**dadurch gekennzeichnet,**
**dass** nach Auffinden zumindest einer Route zwischen den zwei Routenendpunkten (03, 04) die Routenberechnung zum Auffinden von Alternativrouten erst abgebrochen wird, wenn die Kontrollliste leer ist.

15. Routingverfahren nach einem der Ansprüche 1 bis 14,
**dadurch gekennzeichnet,**
**dass** die Routenberechnung in zwei Suchrichtungen sowohl vom ersten Routenendpunkt (03) als auch vom zweiten Routenendpunkt (04) beginnend durchgeführt wird.

16. Routingverfahren nach Anspruch 15,
**dadurch gekennzeichnet,**
**dass** die Abbruchbedingung erfüllt ist, wenn zumindest eine übereinstimmende Straße ermittelt ist, die bei beiden Routenberechnungen aus beiden Suchrichtungen in Schritt e) ausgewählt wurde.

17. Routingverfahren nach Anspruch 15 oder 16,
**dadurch gekennzeichnet,**
**dass** bei der Routenberechnung in zwei Suchrichtungen in der Kombinationsbewertung des Kombinationsbewertungsmoduls neben den exakt berechneten Wegkosten innerhalb einer Kachel (02) und den abgeschätzten Wegkosten außerhalb der Kachel (02) zusätzlich die Klassifizierung der Wichtigkeit der Straße, auf der ein Grenzelement liegt, insbesondere die Klassifizierung der Straße als Autobahn, Bundesstraße oder Landstraße, berücksichtigt wird.

18. Routingverfahren nach Anspruch 17,
**dadurch gekennzeichnet,**
**dass** Grenzelemente (06) bevorzugt ausgewählt werden, die die relativ höchste Straßenklassifizierung aufweisen.

19. Routingverfahren nach einem der Ansprüche 15 bis 18,
**dadurch gekennzeichnet,**
**dass** bei der Routenberechnung in zwei Suchrichtungen die Abbruchbedingung erfüllt ist, wenn eine der beiden für die beiden Suchrichtungen jeweils angelegten Kontrolllisten leer ist.

20. Routingverfahren nach einem der Ansprüche 15 bis 19,
**dadurch gekennzeichnet,**
**dass** bei Erfüllung der Abbruchbedingung wegen einer leeren Kontrolllisten eine Fehlermeldung ausgegeben wird, mit der auf einen isolierten Routenendpunkt hingewiesen wird.

21. Routingverfahren nach einem der Ansprüche 1 bis 20,
**dadurch gekennzeichnet,**
**dass** die Kacheln (02) jeweils die gleiche Fläche der Straßenkarte abdecken.

22. Routingverfahren nach einem der Ansprüche 1 bis 21,
**dadurch gekennzeichnet,**
**dass** die Kacheln (02) jeweils die gleiche Gestalt, insbesondere eine Rechteckform, aufweisen.

23. Routingverfahren nach einem der Ansprüche 1 bis 22,
**dadurch gekennzeichnet,**
**dass** im Routenberechnungsmodul zur Berechnung der exakten Wegkosten innerhalb der Kachel (02) ein Standardwegkostenberechnungsalgorithmus, insbesondere der Routingalgorithmus nach Dijkstra, oder der Routingalgorithmus nach Belmann-Ford, eingesetzt wird.

24. Routingverfahren nach einem der Ansprüche 1 bis 23,
**dadurch gekennzeichnet,**
**dass** im Abstandsbewertungsmodul die Distanz entlang der Luftlinie zwischen einem Grenzelement (06) und dem Routenendpunkt (04) bestimmt und diese Distanz entlang der Luftlinie der Wegkostenabschätzung zu Grunde gelegt wird.

25. Routingverfahren nach einem der Ansprüche 1 bis 24,
**dadurch gekennzeichnet,**
**dass** im Abstandsbewertungsmodul zur Wegkostenabschätzung der A-Star-Algorithmus eingesetzt wird.
